# EUROPEAN PATENT APPLICATION

(11) **EP 4 837 648 A1**
(43) Date of publication of application: **11.11.2026**
(21) Application number: 25193619.1
(22) Date of filing: 04.08.2025
(51) Int. Cl.: B01D 53/00, F27D 17/20, C21B 5/00, C21C 5/38

(54) **BLAST FURNACE-CONVERTER STEEL PRODUCTION METHOD BASED ON CARBON CYCLE**

(30) Priority: 09.05.2025 EP 25175218
(71) Applicant: CISDI Engineering Co., Ltd, Sheffield S4 7YA (GB)
(72) Inventor: XIAO, XUEWEN, Chongqing, 400013 (CN); ZOU, ZHONGPING, Chongqing, 400013 (CN); WANG, GANG, Chongqing, 400013 (CN); ZHAO, YUNJIAN, Chongqing, 400013 (CN); NIU, QUN, Chongqing, 400013 (CN); HOU, SHIFENG, Chongqing, 400013 (CN); XU, JUN, Chongqing, 400013 (CN); HONG, ZHIBIN, Chongqing, 400013 (CN); LI, MUMING, Chongqing, 400013 (CN); LONG, MENG, Chongqing, 400013 (CN)
(74) Representative: Chung, Hoi Kan

(57) **Abstract**

The present invention relates to the field of iron and steel smelting, and specifically to a carbon cycle-based blast furnace-converter steel production method. Molten iron is obtained by ironmaking in a blast furnace; the molten iron is transferred to a converter for steelmaking, producing molten steel and untreated converter gas. The converter gas undergoes pressurization, deoxygenation, dehydration, and decarbonization treatment to obtain decarbonized gas and treated converter gas. Heat source data is collected from blast furnace gas or decarbonized converter gas to determine heating parameters. A heat exchanger is used to heat the treated converter gas; the heated gas is recirculated back into the blast furnace to adjust the reducing gas ratio in the shaft gas. Reducing gas concentration data is acquired from the blast furnace shaft to determine whether the gas injection volume requires adjustment. Enables recycling of converter gas and increases the reducing gas content in blast furnace shaft gas; reduces CO₂emissions through dynamic adjustment of gas injection volume; Optimizes gas treatment, heating, and injection volume for efficient utilization of gas resources.

## Description

### TECHNICAL FIELD

The present invention relates to the field of steel smelting, particularly to a blast furnace-converter steel production method based on carbon cycle.

### BACKGROUND

Greening and low-carbon development is the main theme of the world steel industry today. The ironmaking process is the main carbon emission process of the steel industry (accounting for 85% of the whole steel process), and in the future for a relatively long period of time, the global production process is still based on the blast furnace-converter production process. Therefore, achieving breakthroughs in green and low-carbon smelting technologies is of great significance to supporting the low-carbon development of the steel industry and achieving the goals of peak carbon and carbon neutrality.

Especially as an energy and resource-intensive industry, a large amount of secondary energy and by-products are generated in the steel production process, and the recycling rate of these secondary resources is currently low. Improving the utilization efficiency of secondary energy in the steel production process is of great necessity and development potential for reducing energy consumption and carbon dioxide emissions. Currently, the converter gas production is 80-120 m3 per ton of steel, but the current utilization mode of converter gas in steel plants is still mainly combustion for heating, with low gas utilization rate, and direct combustion will emit a large amount of carbon dioxide, which does not meet the green and low-carbon development requirements.

The converter gas recycling process involves gas purification, circulation, heating and other links, and the technical difficulties mainly lie in the following aspects: first, how to efficiently remove oxygen, water vapor and carbon dioxide from the converter gas and maintain stable composition and calorific value of the gas; second, how to use blast furnace gas or converter desorption gas to provide heat to heat the treated converter gas and precisely control the heating temperature; third, how to stably and continuously blow the high-temperature and high-pressure converter gas into the blast furnace belly to adjust the reducing gas concentration in the blast furnace without affecting the normal production of the blast furnace. These problems involve multiple disciplines such as chemical engineering, thermal engineering, fluid mechanics, etc., and require systematic technological innovation and optimization. Converter gas recycling not only can improve the energy utilization efficiency of the steel production process, but also can significantly reduce carbon dioxide emissions, which is of great significance to the green and low-carbon transformation of the steel industry.

### DETAILED DESCRIPTION OF THE INVENTION

In view of the above-mentioned disadvantages of the prior art, the purpose of the present application is to provide a high-efficiency converter gas utilization and blast furnace injection method based on carbon cycle, so as to solve the problems of low converter gas utilization rate, high carbon dioxide emission and high blast furnace fuel consumption in the prior art, and realize energy saving and emission reduction and efficient utilization of carbon resources.

To achieve the above and other related objects, the present application provides a blast furnace-converter steel production method based on carbon cycle, comprising the following steps:
ironmaking in a blast furnace to obtain molten iron;
introducing the molten iron into a converter, steelmaking in the converter to obtain molten steel and untreated converter gas;
pressurizing, deoxidizing, dehydrating and decarburizing the untreated converter gas to obtain resolved gas and treated converter gas;
circulating the treated converter gas back to be injected into the blast furnace to adjust the proportion of reducing gas in the bustle gas in the blast furnace.

Optionally, the pressurizing, deoxidizing, dehydrating and decarburizing the untreated converter gas to obtain resolved gas and treated converter gas comprises:
pressurizing the untreated converter gas to 0.50-0.65 MPa by a gas pressurizing device to obtain pressurized converter gas;
deoxidizing the pressurized converter gas to an oxygen content of less than 1 ppm by a gas deoxidizing device to obtain deoxidized converter gas;
dehydrating the deoxidized converter gas by a gas dehydrating device until the dehydration efficiency is greater than 95% to obtain dehydrated converter gas;
decarburizing the dehydrated converter gas by a gas decarburizing device until the CO2 removal rate is greater than or equal to 95% to obtain decarburized converter gas.

Optionally, the CO content in the untreated converter gas is greater than or equal to 40%.

Optionally, the pressurizing, deoxidizing, dehydrating and decarburizing the untreated converter gas to obtain treated converter gas further comprises desulfurizing and denitrifying the untreated converter gas, wherein the desulfurizing is prior to the denitrifying.

Optionally, the desulfurizing and denitrifying the untreated converter gas comprises:
desulphurizing the pressurized converter gas to a sulphur content of less than 10 ppm by means of a desulphurization device to obtain a desulphurized converter gas;
denitrifying the decarbonated converter gas until a denitrification efficiency of greater than or equal to 90% by means of a denitrification device to obtain a denitrified converter gas.

Optionally, before the desulphurization treatment, the temperature of the pressurized converter gas is controlled at 60-90°C by means of a cooling device.

Optionally, the pressurization, desulphurization, deoxygenation, dewatering, decarbonation and denitrification treatments are carried out in sequence.

Optionally, the recycling and blowing of the treated converter gas back into the blast furnace to adjust the proportion of reducing gas in the bustle gas in the blast furnace comprises:
heating the treated converter gas to 850-950°C by means of a gas heating device to obtain a heated converter gas;
recycling and blowing the heated converter gas back into the blast furnace by means of a gas blowing device, wherein the blowing mouth of the gas blowing device is directed at the shaft and/or tuyere of the blast furnace so that the converter gas is blown into the shaft and/or tuyere of the blast furnace.

Optionally, the heat required for heating by the gas heating device is provided by the combustion of gas in a gas pipeline network, wherein the gas in the gas pipeline network comprises blast furnace gas and/or the resolved gas from the blast furnace.

Optionally, the decarbonation treatment is dry decarbonation or wet decarbonation; when the decarbonation treatment is dry decarbonation, the CO₂ concentration in the resolved gas is less than or equal to 95%, and the resolved gas is fed into a gas pipeline network connected to the blast furnace; when the decarbonation treatment is wet decarbonation, the CO₂ concentration in the resolved gas is greater than 95%, and the resolved gas is subjected to CCUS treatment.

Optionally, heat source data is obtained from blast furnace gas or converter resolved gas, and heating parameters are determined in combination with a preset heating temperature range; the treated converter gas is heated by means of a heat exchanger by using the heat source data and heating parameters to obtain gas with stable temperature; reduction gas concentration data is obtained from the bustle of the blast furnace, and whether the amount of gas blowing needs to be adjusted is determined in combination with a preset concentration adjustment range, and the amount of gas blowing is adjusted according to the determination result.

Optionally, the obtaining of heat source data from blast furnace gas or converter resolved gas and the determination of heating parameters in combination with a preset heating temperature range comprises:
Obtain the composition data and calorific value data of the blast furnace gas and the converter resolved gas, and calculate the required heat according to the preset heating temperature range;
According to the calorific value data of the blast furnace gas and the converter resolved gas, the optimal mixing ratio of the blast furnace gas and the converter resolved gas is calculated by using the linear programming algorithm, so as to meet the required heat and minimize the cost;
If the heat under the optimal mixing ratio calculated is insufficient to reach the preset target temperature range, the required electric heating power parameter is determined by using the bisection search algorithm according to the heat difference;
Mix the blast furnace gas and the converter resolved gas according to the optimal mixing ratio calculated, and control the electric heating device according to the calculation result to heat the mixed gas;
During the heating process, the heating temperature data are collected in real time by the temperature sensor, and the data are input into the PID control algorithm to adjust and optimize the heating process in real time;
When the heating temperature reaches the target temperature within the preset range, it is judged that the heating process is completed, the heating is stopped, and the heating parameters and energy consumption data are output;
According to the historical heating parameters and energy consumption data, the heating model and control strategy are continuously optimized by using the reinforcement learning algorithm, so as to further improve the heating efficiency and energy saving effect.

Optionally, the processed converter gas is heated by using a heat exchanger according to the heat source data and the heating parameters to obtain gas with stable temperature, comprising:
Obtain parameter data such as temperature and flow rate of the heat source as input of the heating parameters, and establish a mapping model of the heat source parameters and the heating parameters by using a machine learning algorithm;
According to parameters such as composition and flow rate of the converter gas, a clustering algorithm is used to classify the converter gas to obtain characteristic parameters of different categories of gas;
The characteristic parameters of the converter gas are input into the mapping model to obtain a heating parameter control strategy for the category of gas;
The heating parameter control strategy is applied to the control system of the heat exchanger to realize the heating treatment of the converter gas by adjusting the working parameters of the heat exchanger;
A temperature sensor is arranged at the outlet of the heat exchanger to collect temperature data of the heated gas in real time, and the temperature data are compared with the target temperature range;
If the gas temperature deviates from the target range, the deviation data will be fed back to the heat exchanger control system, and the heating parameters will be adjusted through the optimization algorithm to make the gas temperature return to the target range;
If the gas temperature data measured continuously for multiple times are all within the target range, it is judged that the gas temperature has stabilized, and the gas is delivered to the downstream process for utilization.

Optionally, the reduction gas concentration data is obtained from the blast furnace bosh, and combined with the preset concentration adjustment range, it is judged whether the coal gas injection amount needs to be adjusted, including:
The reduction gas concentration data collected in real time in the blast furnace bosh is obtained, and it is compared and analyzed with the preset concentration adjustment range;
If the reduction gas concentration exceeds the upper limit of the preset range, it is judged that the coal gas injection amount needs to be reduced; if it is below the lower limit of the preset range, it is judged that the coal gas injection amount needs to be increased;
According to the above judgment result, the specific adjustment value of the coal gas injection amount is determined, and the adjustment instruction is issued to the coal gas injection device through the control system;
A PID control algorithm is adopted, taking the reduction gas concentration as the controlled object and the coal gas injection amount as the control variable, to establish a closed-loop feedback control system for real-time dynamic adjustment of the coal gas injection amount;
A safety threshold range of the coal gas injection amount is set, and if the adjusted injection amount exceeds the safety range, an alarm will be triggered to prompt manual safety intervention and disposal as necessary;
The reduction gas concentration change trend data is continuously collected, and the time series analysis algorithm is used to predict the concentration change trend in the future period of time for early optimization and adjustment of the coal gas injection amount;
While adjusting the coal gas injection amount, other process parameter data of the blast furnace is obtained, the coupling relationship between various parameters is comprehensively analyzed, a multi-parameter collaborative optimization model is established using the neural network algorithm, and collaborative optimization control of the overall process is achieved.

The blast furnace-converter steel production method based on carbon recycling of the present invention has at least the following beneficial effects:
1. Realizing the recycling utilization of converter gas, recycling the converter gas back to the blast furnace after decarburization, increasing the reduction gas content in the blast furnace bosh gas, promoting the indirect reduction in the blast furnace, reducing the direct reduction, thereby reducing the consumption of carbonaceous fuel in the blast furnace ironmaking process, and effectively reducing the CO₂ emission.
2, Adopting algorithms such as linear programming, binary search, PID control, reinforcement learning, and machine learning, intelligent control and optimization of the heating process and injection process are achieved. By dynamically adjusting the amount of gas injection, the optimal reducing gas concentration is maintained, the blast furnace injection process is optimized, and the stability and efficiency of the smelting process are improved.

### BRIEF DESCRIPTION OF DRAWINGS

FIG. 1 is a schematic flow chart of a first embodiment of the blast furnace-converter steel production method based on carbon cycle provided by the present application;
FIG. 2 is a schematic diagram of a production system for implementing the first embodiment;
FIG. 3 is a schematic flow chart of a second embodiment of the blast furnace-converter steel production method based on carbon cycle provided by the present application;
FIG. 4 is a schematic diagram of a production system for implementing the second embodiment;
FIG. 5 is a schematic flow chart of a third embodiment of the blast furnace-converter steel production method based on carbon cycle provided by the present application;
FIG. 6 is a schematic diagram of a production system for implementing the third embodiment;
FIG. 7 is a schematic flow chart of a fourth embodiment of the blast furnace-converter steel production method based on carbon cycle provided by the present application;
FIG. 8 is a schematic diagram of a production system for implementing the fourth embodiment;
FIG. 9 is a schematic flow chart of a fifth embodiment of the blast furnace-converter steel production method based on carbon cycle provided by the present application;
FIG. 10 is a schematic diagram of a production system for implementing the fifth embodiment;
FIG. 11 is a schematic diagram of a gas injection device injecting gas into the blast furnace shaft;
FIG. 12 is a schematic diagram of a gas injection device injecting gas into the blast furnace shaft and tuyere.

### REFERENCE NUMERALS

1-blast furnace; 11-shaft; 12-tuyere; 2-converter; 3-gas injection device; 4-converter gas collection device; 51-gas pressurizing device; 52-gas desulfurization device; 53-gas deoxidation device; 54-gas dehydration device; 55-gas decarburization device; 56-gas denitrification device; 6-gas heating device; 7-gas pipe network; 8-CCUS device; 9-liquid steel.

### Embodiments

With the embodiment of the invention described below through specific examples, those skilled in the art can easily understand the other advantages and benefits of the invention by the contents disclosed in the specification. The invention may be implemented or applied through different specific embodiments, and the details in the specification can be modified or changed based on different views and applications without departing from the spirit of the invention.

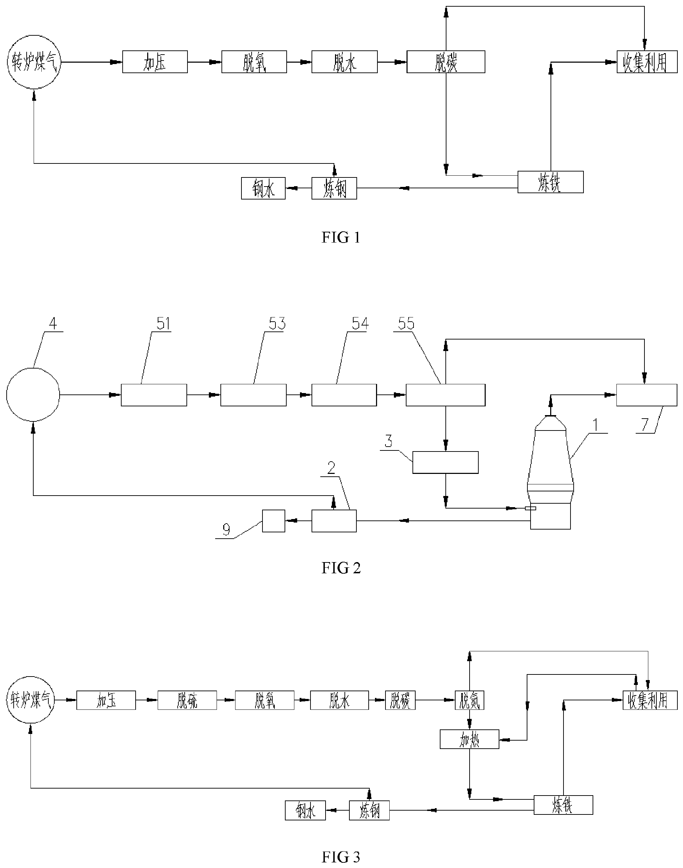

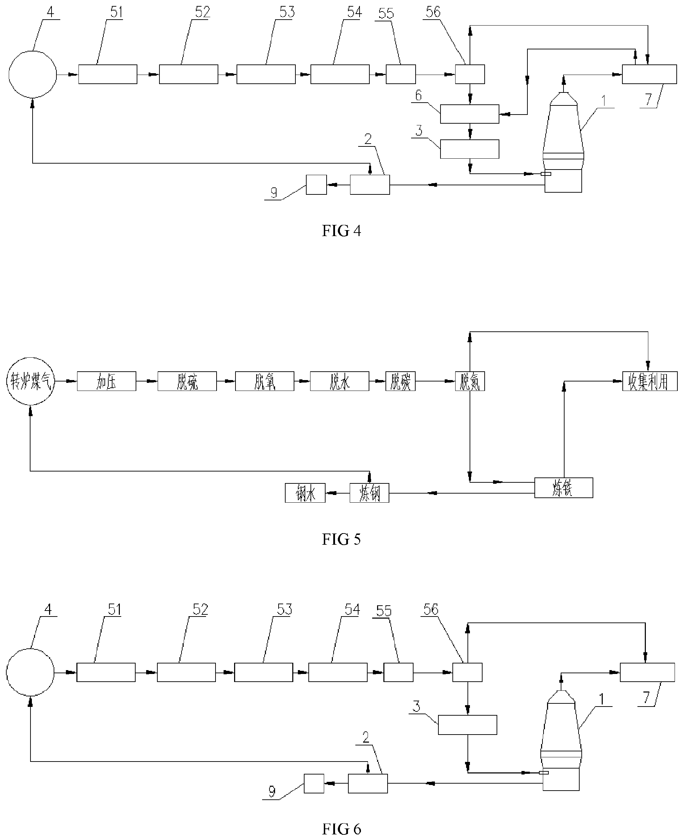

Please see Figures Figure 1 to Figure Figure Figure 6. It should be noted that the illustration provided in the present embodiment only schematically illustrates the basic idea of the present invention, showing only the components related to the present invention rather than the number, the shape and the size of the components may be a random change, and the component layout pattern may be more complex. The structure, proportion, size and etc. shown in the schema attached to the specification are only used to match the contents of the specification for the purpose of understanding or reading, not to limit the limitation of the implementation of the invention. At the same time, the terms such as "up", "down", "left", "" right "," middle "and" one " are only for the convenience of description, rather than limiting the scope of the invention, the relative relationship of the invention can be implemented without substantial change of technical content.

Before describing the embodiment of the invention, the application environment of the invention is described. The technology of the present invention is mainly applied to iron and steel smelting, especially to the carbon cycle in the production process of blast furnace-converter steel. The present invention solves the problem of high carbon dioxide emissions in the generation process of traditional steel.

Referring to FIGS. 1 to 10, in some embodiments, the present application provides a blast furnace-converter steel production method based on a carbon cycle, comprising the following steps:
Ironmaking in blast furnace 1 to obtain molten iron;
Introduce the molten iron into converter 2 and make steel in converter 2 to obtain molten steel and untreated converter gas;
Presize, deoxylate, dehydration and decarbonize untreated converter gas to obtain analytical gas and treated converter gas;
The treated converter gas is recycled back into the blast furnace 1 to adjust the proportion of reduced gas in the furnace belly gas in the blast furnace 1.

Further, pressure, deoxygenation, dehydration, and decarbonization were performed sequentially.

Optionally, blast furnace 1 is connected to converter 2, and converter gas generated by converter 2 during the steelmaking process can be collected and stored through the converter gas collection device 4.

Further, the converter gas collection device 4 may be a converter gas cabinet or converter gas user pipe network.

The blast furnace-converter steel production method, through simple steps can use the converter gas in the process of steelmaking, make the converter gas after pressure, deoxygenation, dehydration and decarbonization treatment, cycle back to the blast furnace ironmaking, make full use of the effective reducing gas, converter gas in blast furnace gas reducing gas ratio, promote the indirect reduction, reduce the carbon fuel consumption of blast furnace iron, effectively reduce the CO2 emissions of blast furnace-converter steel production system.

Obtain the heat source data from the blast furnace gas or the converter analytical gas, determine the heating parameters in combination with the preset heating temperature range; use the heat source data and heating parameters, use the heat exchanger to heat the processed converter gas, obtain the reduced gas concentration data from the belly of the blast furnace, determine whether it is necessary to adjust the gas injection amount, and adjust the gas injection amount according to the judgment result.details are as follows:
S101. Obtain the heat source data from the blast furnace gas or the converter analytical gas, and determine the heating parameters in combination with the preset heating temperature range.

Obtain the composition data and calorific value data of blast furnace gas and converter analytical gas, and calculate the required heat according to the preset heating temperature range. According to the calorific value data of blast furnace gas and converter analytical gas, the linear planning algorithm is used to calculate the optimal mixing ratio of blast furnace gas and converter analytical gas to meet the required heat and minimize the cost. If the heat under the calculated optimal mixing ratio is not enough to reach the preset target temperature range, the required electric heating power parameter is determined through the binary search algorithm according to the heat difference value. The blast furnace gas and the converter analytical gas are mixed according to the calculated optimal mixing ratio, and the electric heating device is controlled according to the calculation results to heat the mixed gas. During the heating process, the heating temperature data is collected in real time through the temperature sensor, and the data is transmitted to the PID control algorithm to adjust and optimize the heating process in real time. When the heating temperature reaches the target temperature within the preset range, judge that the heating process is completed, stop the heating, and output the heating parameters and energy consumption data. According to the historical heating parameters and energy consumption data, the reinforcement learning algorithm is adopted to continuously optimize the heating model and control strategy to further improve the heating efficiency and energy saving effect.

Specifically, first, the composition and calorific value data of blast furnace gas and converter analytical gas are obtained from the production system database. The calorific value of blast furnace gas is 3200 kJ / Nm ³, and the calorific value of converter analytical gas is 8000 kJ / Nm ³. According to the process requirements, the preset heating temperature range is 800~100°C, providing 6000 kJ of heat per cubic meter of mixture. Using a linear programming model, with the volume ratio of blast furnace gas and converter analysed gas as the independent variable and the lowest total cost as the objective function. The optimal ratio is 70% blast furnace gas and 30% converter analytical gas. However, under this ratio, the calorific value of the mixed gas is only 4360 kJ / Nm ³, which cannot meet the heating requirements. Based on the heat difference value, a binary finding algorithm is used to determine the electric heating power as 1.2MW. Mix the blast furnace gas and the converter analytical gas according to the optimal proportion, and start the electric heating device at the same time to heat the mixed gas. The temperature sensor collects the temperature data every second, inputs the data into the PID control model, and adjusts the electric heating power and the mixed gas flow rate in real time according to the deviation signal. After 20 minutes, the heating temperature is stable at 950°C. When the heating is judged to be complete, the valve and the electric heating device are closed, and the parameters and energy consumption data of the heating process are output. The total consumption of the mixed gas is 2400 Nm ³, and the power consumption is 1440kWh. The data was uploaded to the server, and based on the reinforcement learning algorithm, the mixing ratio, electric heating power and other parameters were dynamically optimized through continuous attempts and feedback. Finally, the heating time was shortened to 15 minutes, the mixed gas consumption was reduced by 10%, the power consumption was reduced by 8%, and the intelligent energy saving optimization was realized.

S102. Through the heat source data and heating parameters, the heat exchanger is used to heat the treated converter gas to get the gas with stable temperature.

Obparameter data on temperature and flow rate of the heat source, As an input to the heating parameters, Establish the mapping model of heat source parameters and heating parameters through machine learning algorithm; According to the composition, flow rate and other parameters of the converter gas, A clustering algorithm was used to classify the converter gas, Get the characteristic parameters of different types of coal gas; Input the characteristic parameters of the converter gas into the mapping model, Obtain the heating parameter control strategy for this type of coal gas; Applying the heating parameter control strategy to the control system of the heat exchanger, By adjusting the operating parameters of the heat exchanger, Realize the heating treatment of the converter gas; Set up the temperature sensor at the heat exchanger outlet, Real-time temperature data of heating gas, Compare the temperature data to the target temperature range; If the gas temperature deviates from the target range, Feedback the deviation data to the heat exchanger control system, Adjusting the heating parameters by using the optimization algorithm, Return the gas temperature to the target range; The gas temperature data measured in several times are within the target range, Then judge that the gas temperature is stable, Transfer the coal gas to the downstream process for utilization.

Specifically, the data of temperature and flow of blast furnace gas are collected as the heating parameters of the heat exchanger. The support vector machine regression algorithm is used to establish a mapping model between the blast furnace gas parameters and the heat exchanger heating parameters. The input of the model is the blast furnace gas temperature and flow rate, and the output is the steam temperature, pressure and flow rate parameters of the heat exchanger. According to the CO, CO2, H2 content and flow parameters of converter gas, K-means clustering algorithm is divided into three categories: high calorific value (CO 55%, H220%), medium calorific value (40% CO <55%, 10% H2 <20%) and low calorific value (CO <40%, H2 <10%) to obtain the typical composition and flow data of each type of gas. The characteristic parameters of converter gas are input into the SVM mapping model to obtain the best combination of heating parameters corresponding to different categories of gas. For example, the steam temperature of high calorific value gas is 250°C, the pressure is 5MPa, and the flow rate is 5000kg / h. After receiving the gas heating parameters, the heat exchanger control system adjusts the opening of the steam valve and the fuel amount of the burner, so that the actual working parameters of the heat exchanger can match with the set value, so as to realize the accurate temperature control of the converter gas. A PT 100 platinum resistance temperature sensor is installed at the heat exchanger outlet, and the temperature data of the heated gas is collected every 5 seconds. Compare the collected temperature data with the target range (e. g., 1200°C± 20°C), and if the temperature exceeds the target range, feedback the deviation value to the control system. The control system adopts the PID algorithm to optimize the heating parameters, and adjusts the steam temperature, pressure and flow rate according to the deviation size and duration, so that the gas temperature quickly returns to stability. When the gas temperature is within the target range for 1 minute and the fluctuation is less than 5°C, the heating process is determined to be over, and the qualified high temperature converter gas is transported to the downstream process such as sintering. By optimizing the heating parameters of the heat exchanger and combining with the real-time closed-loop control, the precise control of the converter gas heating temperature can be realized, and the energy utilization efficiency and process stability can be improved.

S103. Obtain the reduced gas concentration data from the belly of the blast furnace, and judge whether the gas injection amount needs to be adjusted according to the preset concentration adjustment range.

Get the reduced gas concentration data collected in the blast furnace and compare it with the preset concentration adjustment range. If the reduced gas concentration exceeds the upper limit of the preset range, the gas charge needs to be reduced; if it is lower than the preset range, the gas charge must be increased. According to the above judgment results, the specific adjustment value of the gas injection amount is determined, and the adjustment instruction is issued to the gas injection device through the control system. The PID control algorithm is adopted to take the reduced gas concentration as the controlled object and the gas injection volume as the control variable. The closed-loop feedback control system is established to dynamically adjust the gas injection volume in real time. Set the safety threshold range of gas injection volume. If the adjusted injection volume exceeds the safety range, the alarm prompt will be triggered, and the necessary safety intervention and disposal will be carried out by man. The change trend data of reduced gas concentration is continuously collected, and the time series analysis algorithm is used to predict the concentration change trend in the future time, and the gas injection volume is optimized and adjusted in advance. At the same time, the data of other process parameters of the blast furnace is obtained, the coupling relationship between the parameters is comprehensively analyzed, and the multi-parameter cooperative optimization model is established by using the neural network algorithm to realize the collaborative optimization control of the overall process.

Specifically, the reduced gas concentration data is first collected through the gas concentration sensor installed in the belly of the blast furnace. For example, the CO concentration is 20% and the H2 concentration is 15%. The preset adjustment range of concentration is 18% to 22% CO concentration and 13% to 17% H₂ concentration. Comparing and analyzing the collected real-time concentration data with the preset range, we found that both the CO concentration and the H₂ concentration are within the preset range, and there is no need to adjust the gas injection volume. If the CO concentration exceeds 22% or H₂ concentration exceeds 17%, the gas injection is reduced according to the degree of deviation, e. g. 1% by 10 m 3 / h by 1%. If the CO concentration is less than 18% or the H₂ concentration is less than 13%, the gas injection amount is increased according to the deviation degree, for example, the deviation of 1% will increase the injection amount by 10 m 3 / hour. The PID control algorithm is used to establish the closed-loop feedback control system, which dynamically calculates the adjustment value of the gas injection amount according to the deviation between the reduced gas concentration and the target value, and the control system will issue it to the actuator of the gas injection device under the adjustment instruction. At the same time, the safety threshold of gas injection volume is set at 100~500 cubic meters / hour. If the adjusted injection volume exceeds this range, then the sound and light alarm is triggered and the process engineer is informed to conduct safety intervention. The change data of reduced gas concentration in the last 24 hours is continuously collected, and the trend prediction is made using ARIMA time series model. If the CO concentration is predicted to exceed 22% in the next 4 hours, the gas injection volume will be reduced by 20 cubic meters / hour in advance. In the real-time optimization of gas injection at the same time, the system also obtain the blast furnace hot air temperature, roof pressure, charge level and other process parameters, using BP neural network algorithm to establish the parameters and gas injection nonlinear correlation model, when the charge level drop, appropriately reduce the gas injection amount to ensure the stability of gas solid proportion, achieve many collaborative optimization control.

Referring to FIGS. 1 to 10, in some embodiments, the untreated converter gas is pressurized, deoxygenation, dehydrated, and decarbonized to obtain the analytical gas and the treated converter gas, including:
Compress the untreated converter gas to 0.50Mpa~0.65Mpa through the gas pressurization device 51 to obtain the pressurized converter gas;
The gas deoxygenation device 53 can deoxylate the pressurized converter gas to less than 1ppm oxygen content to obtain the deoxygenation of the converter gas;
The gas dewatering converter gas until the dehydration efficiency is greater than 95% to obtain the dehydrated converter gas;
Decarbonize the dehydrated converter gas through the gas decarbonization device 55 to 95%.
Optionally, the gas pressurization device 51, gas deoxydevice 53, gas dehydration device 54 and gas decarbonization device 55 are connected in entially.

Further, the gas pressurization device 51 is connected to the converter gas collecting device 4.

Referring to FIGS. 1,2,7 to 10, in some embodiments, the CO content in the untreated converter gas is greater than or equal to 40%, that is, the carbon monoxide content in the converter gas discharged from the converter gas collecting device 4 of the gas to the gas pressurization device 51 is greater than or equal to 40%. Among them, when the CO content in the untreated converter gas is greater than or equal to 40%, the untreated converter gas can be pressurized, deoxygenation, dehydrated and decarbonized in order to obtain the treated converter gas.

Referring to FIGS. 3 to 6, in some embodiments, untreated converter gas is pressurized, deoxyated, dehydrated, and decarbonized to obtain treated converter gas, also including desulphurization and denitrification of untreated converter gas, wherein desulphurization precedes denitrification treatment.

Optionally, converter gas pressurization, desulfurization, deoxygenation, dehydration, decarbonization and denitrification treatment of the order.

Optionally, perform the desulfurization and denitrification treatment of the untreated converter gas, including:
From the pressurized converter gas to the pressurized sulfur content is less than 10ppm to obtain the sulfur content in the converter gas can be 0.1ppm~10ppm.

The converter gas after denitrification is obtained through the denitrification device 56 until the denitrification efficiency is greater than or equal to 90%.

Further, the gas pressurization device 51, gas desulfurization device 52, gas deoxidation device 53, gas dehydration device 54, gas decarbonization device 55 and gas nitrogen removal device are connected in turn.

Optionally, the pressurized converter gas temperature is controlled at 60°C ~90°C by the cooling device before the desulfurization treatment. Among in, the cooling device may be provided on the gas pressurization device 51 to adjust the cooling capacity of the outlet end of the gas pressurization device 51.

Referring to FIGS. 3 to 6, in some embodiments, untreated converter gas may be pressurized, desulfurization, desulfurization, dehydrated, dehydrated, dehydrated, and denitrification successively in order to obtain treated converter gas.

Referring to FIGS. 1 to 12, in some embodiments, the processed converter gas cycle is injected back into the blast furnace 1 to adjust the proportion of reduced gas in the belly gas in the blast furnace 1, including:
Heat the treated converter gas to 850°C ~950°C by the gas heating device 6 to obtain the heated converter gas;

The heated converter gas is circulated back into the blast furnace 1 by the gas blowing device 3, where the nozzle of the gas injection device 3 is aligned with the furnace body 11 and / or the air outlet 12 of the blast furnace 1 to inject the converter gas into the furnace body 11 and / or the air outlet 12 of the blast furnace 1.

Among in, the gas heating device 6 may be set or not set according to the demand, and the gas heating device 6 can recharge the converter gas into the blast furnace 1.

Optionally, when the gas heating device 6 is provided, the heat required for heating the gas heating device 6 is supplied by the gas combustion in the gas pipe network 7, where the gas in the gas pipe network 7 includes the blast furnace gas and / or analytical gas in the blast furnace 1.

Further, the gas pipe network 7 is connected to the blast furnace 1 and the gas heating device 6, for collecting the blast furnace gas within the blast furnace 1 and for providing heat to the gas heating device 6 by combustion.

Optionally, when the nitrogen removal treatment is not performed, the gas pipe network 7 is connected to the gas decarburization device for collecting the analytical gas in the treated converter gas.

Optionally, when undergoing denitrification treatment, the gas pipe network 7 is connected to the coal nitrogen decarburization device for collecting the analytical gas in the treated converter gas.

Referring to FIGS. 1 to 10, in some embodiments, the decarbonization treatment may be decarbonized as dry or wet. When the decarbonization treatment is dry decarbonization, the CO₂ concentration in the analytical gas is less than or equal to 95%, and the analytical gas is transferred into the gas pipe network 7 connected with the blast furnace 1; when the decarbonization treatment is wet decarbonization, the CO₂ concentration in the analytical gas is greater than 95%, and the analytical gas is treated by CCUS.

Optionally, when the analytical gas is processed by CCUS (Carbon Capture, Utilization and Storage, carbon capture, utilization and storage), it can be processed by a CCUS device connected to the decarbonization device 55.

Taking a 2850m3 blast furnace as an example, the physical balance and thermal balance of the blast furnace are simulated and calculated, and the invention is further explained with different embodiments.

Table 1 to Table 4 show the raw fuel conditions of blast furnace and the process parameters of conventional blast furnace.

**Table 1 Grade of blast furnace ore intake**

| FeO | Fe2O3 | TFe | else |
|---|---|---|---|
| 5.5% | 77.28% | 58.38% | 17.21% |

**Table 2 Composition of pulverized coal injection in blast furnace**

| fixed carbon | ash content | volatile matter | Volatility component | | | | |
|---|---|---|---|---|---|---|---|
| | | | CH₄ | C₂H₆ | N₂ | H₂ | CO |
| 66% | 10.24% | 23.63% | 75.0% | 21.0% | 2.0% | 0.0% | 2.0% |

**Table 3 Average composition of converter gas**

| Dry gas composition | | | | | |
|---|---|---|---|---|---|
| | CO | CO2 | H2 | N2 | O2 |
| average value% | 44.2 | 27.7 | 1.5% | 28.6% | 0.3% |
| wave range% | 40~60 | 11.1~30 | 0~4.1 | 14.9~30 | 0~0.4 |

**Table 4. Main technical indexes of conventional blast furnaces**

| parameter | Conventional blast furnace |
|---|---|
| Coke ratio, kg / thm | 355 |
| Coal ratio, kg / thm | 160 |
| Fuel ratio, kg / thm | 515 |
| Furnank gas reduced gas ratio | 46% |
| wind-warm syndrome,°C | 1250 |
| wind presssure,Mpa | 0.5 |
| Drum wind oxygen-rich rate | 5% |
| theoretical combustion temperature,°C | 2026 |

### Embodiment 1:

This embodiment uses converter gas dry decarbonization, no nitrogen, and no heating. Referring to FIGS. 1 and 2, the carbon cycle-based blast furnace-converter steel production system of this embodiment is implemented, including, but not limited to, converter gas collection device 4, gas pressurization device 51, gas deoxydevice 53, gas decarbonization device 54, gas deizing device 55, gas injection device 3, blast furnace 1, gas pipe network 7, and converter 2. Among them, the blast furnace 1, gas pipe network 7 and converter 2 are consistent with the conventional blast furnace-converter system, and the raw fuel conditions of the conventional blast furnace are specified in Table 1 to Table 3.

The high temperature molten iron produced by blast furnace 1 is transported to converter 2 for decarbonization, dephosphorization, desulfurization and deoxidation to obtain qualified molten steel 9. Converter 2 is a periodic steelmaking device, with a general smelting cycle of 25~45min, and requires blowing oxygen and decarbonization operation. Therefore, the converter gas with different CO content will be produced intermittently in the steelmaking process. When the CO content in the converter gas is greater than or equal to 40%, it can enter the converter gas collection device 4 for storage for the downstream process.

In this embodiment, the converter gas collection device 4 may be a converter gas cabinet. The converter gas with CO content is about 77000 N m3/h. For the specific composition of converter gas, see in Table 3, including CO: 44.2%, CO₂:27.7%, H₂:1.5% and N₂:28.6%. The resulting converter gas is pressurized to 0.50Mpa~0.65Mpa by the gas pressurization device 51 to meet the subsequent decarbonization treatment of the gas decarbonization device 55, and the gas injection device 3 can normally inject the converter gas into the blast furnace 1.

As shown in Table 3, converter gas also contains a certain proportion of oxygen, with the normal range of 0~0.4%. Considering that the molecular sieve of the gas decarbonization device 55 is afraid of oxygen, and the compression of the converter gas and the risk of gas explosion in the heating process, the gas deaerization device 53 is used for deoxygenation of the converter gas, and the oxygen content is <1ppm after treatment.

The converter gas after deaerization is transferred into the gas decarbonizing device 54 in the gas decarbonization device 55. By dry decarbonization process, the converter gas amount after decarbonization is about 52000 N m³/h, and the analytical gas volume is about 25000 N m³/h. The decarbonized gas and analytical gas composition are shown in Table 5.

**Table 5 Converter gas and analytical gas composition after decarbonization**

| ingredient | CO | CO₂ | H₂ | N₂ |
|---|---|---|---|---|
| Converter gas after denitrification and decarbonization V% | 59 | 1 | 1 | 39 |
| Analytic gas V% | 13.7 | 83.8 | 2.5 | 0 |

After the gas decarbonization device 55 adopts the dry decarbonization process, there is still about 14% CO in the analytical gas generated, which cannot be directly discharged or processed by CCUS (Carbon Capture, Utilization and Storage, carbon capture, utilization and storage). The analytical gas generated is directly imported into the gas pipe network 7 through the pipeline and used as fuel.

After pressurized, decarbonization of converter gas directly cold by the gas injection device 3 by the blast furnace outlet into the blast furnace 1, can greatly increase the reducing gas, furnace gas composition, as shown in table 6, to promote the indirect reduction of blast furnace, reduce direct reduction, reduce the blast furnace 1 smelting fuel consumption of iron per ton, reduce the CO₂ emissions in the process of blast furnace ironmaking.

**Table 6. Composition of furnace belly gas**

| ingredient | CO | H2 | N2 |
|---|---|---|---|
| content | 45% | 7.3% | 47.7% |

After the calculation of heat balance and material balance of blast furnace, after the decarbonized converter gas is reinjected back to blast furnace 1, the fuel ratio is 463kg / t, and the coal ratio is 150kg / t and the coke ratio is 313kg / t. Compared with the conventional blast furnace, the carbon-containing fuel is significantly reduced, the fuel ratio is reduced by 52kg / t, the direct carbon reduction ratio is 10%, and the CO₂ emission per ton of iron is reduced by about 165kg / t. The specific indicators are shown in Table 7.

**Table 7: The main technical indicators of Embodiment 1**

| parameter | Conventional blast furnace | Embodiment 1: the converter gas is decarbonized, not denitrification, and not heated |
|---|---|---|
| Coke ratio, kg / thm | 355 | 313 |
| Coal ratio, kg / thm | 160 | 150 |
| Fuel ratio, kg / thm | 515 | 463 |
| Furnank gas reduced gas ratio | 46% | 50% |
| Drum wind oxygen-rich rate | 5% | 9.5% |
| Carbon reduction ratio | | 10% |

After the molten iron of the blast furnace 1 is tempered by the converter 2, the molten steel is used for the subsequent process, and the by-product converter gas is recycled by the converter gas collection device 4. Such recycling of converter gas can realize the purpose of highly efficient smelting of blast furnace and reducing CO2 emission.

### Embodiment 2:

This embodiment uses converter gas dry decarbonization, nitrogen removal and heating. Referring to FIG. 3 and 4, the carbon cycle-based blast furnace-converter steel production system of this embodiment is implemented, including, but not limited to, converter gas collecting device 4, gas pressurization device 51, gas desulfurization device 52, gas deoxidation device 53, gas dehydration device 54, gas dewatering device 54, gas decarbonization device 55, gas nitrogen removal device 56, gas heating device 6, gas blowing device 3, blast furnace 1, gas pipe network 7, and converter 2. Among them, blast furnace 1, gas pipe network 7 and converter 2 are consistent with the conventional blast furnace-converter system.

In this embodiment, the converter gas collection device 4 can be a converter gas cabinet, this embodiment and embodiment 1 are increased, the gas desulfurization device 52, the gas nitrogen removal device 56, the gas heating device 6 and the gas pressurization device 51 cooling device, equipped with other systems and treatment methods, and the original fuel conditions completely consistent with the embodiment 1, no repeated description, only the differences.

In this embodiment, the cooling capacity of the outlet end of the gas pressurization device 51 is adjusted by the cooling device to ensure that the pressurized converter gas outlet temperature is within the range of 60°C to 90°C to meet the desulfurization of the converter gas. The normal converter gas contains 15% to 30% nitrogen. In order to increase the proportion of reduced gas entering into the blast furnace 1 and improve the decarbonization effect, the gas denitrification device 56 can be used to reduce the N2 content in the furnace. Because the converter gas contains 20~30ppm S content, the gas nitrogen removal device 56 requires extremely high S content control to prevent nitrogen removal adsorbent poisoning. Therefore, in order to meet the requirements of gas nitrogen removal, the gas needs to use gas desulfurization 52 for desulfurization treatment, and the temperature of converter gas is controlled at 60°C ~90°C, and the S content is less than 10ppm after treatment. For example, the S content can be within the range of 0.1ppm~10ppm.

In this embodiment, the converter gas is successively treated by pressurization, desulfurization, deoxygenation, dehydration, decarbonization and denitrification before heating treatment. Among them, the converter gas decarbonized by dry decarbonization process, and the converter gas after decarbonized nitrogen treatment. After decarbonization and denitrification, the converter gas volume is about 35000 N m3/h, and the analytical gas volume generated is about 42000 N m3/h. The gas composition is shown in Table 8.

**Table 8 Converter gas and analytical gas composition after decarbonization and denitrification**

| ingredient | CO | CO₂ | H₂ | N₂ |
|---|---|---|---|---|
| Converter gas after denitrification and decarbonization V% | 88 | 1 | 1 | 10 |
| Analytic gas V% | 8 | 50 | 2 | 40 |

After using the dry decarbonization process, there is still about 8% CO in the analytical gas produced, which cannot be directly discharged or treated by CCUS. The analytical gas generated is directly imported into the blast furnace gas pipe network 7 through the pipeline and used as fuel.

After decarbonization and denitrification, the converter gas is heated to 850°C ~950°C by the gas heating device 6 to recharge the heat into the blast furnace 1, and the heat required by the gas heating device 6 is provided by the blast furnace gas combustion in the gas pipe network 7.

After pressure, decarbonization, nitrogen, heating of converter gas by gas injection device 3 by the blast furnace outlet into blast furnace 1, can greatly increase the reducing gas ratio in furnace gas, shown in table 9, to promote the indirect reduction of blast furnace, reduce direct reduction, reduce the blast furnace 1 fuel consumption of smelting per ton of iron, reduce the CO2 emissions in the process of blast furnace ironmaking.

**Table 9 Composition of furnace gas**

| ingredient | CO | H₂ | N₂ |
|---|---|---|---|
| content | 42.4% | 8.6% | 49% |

According to the blast furnace heat balance and material balance calculation, after the decarization, denitrification and heated converter gas is sprayed back to blast furnace 1, the fuel ratio is 433kg / t, with coal ratio 180kg / t and coke ratio 253kg / t. Compared with the conventional blast furnace, the carbon-containing fuel is significantly reduced, the fuel ratio is reduced by 82kg / t, the direct carbon reduction ratio is 16%, and the CO2 emission per ton of iron is reduced by about 256kg / t. The specific indicators are shown in Table 10.

### The main technical indicators of Embodiment 2

| parameter | Conventional blast furnace | Embodiment 2: converter gas decarbonization, denitrification, heating |
|---|---|---|
| Coke ratio, kg / thm | 355 | 253 |
| Coal ratio, kg / thm | 160 | 180 |
| Fuel ratio, kg / thm | 515 | 433 |
| Furnank gas reduced gas ratio | 46% | 51% |
| wind-warm syndrome,°C | 1250 | 1250 |
| wind presssure,Mpa | 0.5 | 0.5 |
| Drum wind oxygen-rich rate | 5% | 6% |
| theoretical combustion temperature,°C | 2026 | 2078 |

### Embodiment 3:

This embodiment uses converter gas dry decarbonization, nitrogen removal and unheating. Referring to FIGS. 5 and 6, the carbon cycle based blast furnace-converter steel production system of this embodiment is implemented, including, but not limited to, converter gas collection device 4, gas pressurization device 51, gas desulfurization device 52, gas deoxidation device 53, gas dewatering device 54, gas decarbonization device 55, gas nitrogen removal device 56, gas blowing device 3, blast furnace 1, gas pipe network 7, and converter 2. Among them, blast furnace 1, gas pipe network 7 and converter 2 are consistent with the conventional blast furnace-converter system. The difference with Embodiment 2 is that the converter gas after decarbonization and nitrogen is not heated by gas, but directly sprayed into the blast furnace 1, other systems and treatment methods, and the raw fuel conditions are completely consistent with Embodiment 2, no repeated description, and only the differences are described.

After pressurized, decarbonization, nitrogen converter gas by gas injection device 3 by the blast furnace outlet into the blast furnace 1, can greatly increase the reduction gas in furnace gas, furnace gas composition see table 11, to promote the indirect reduction of blast furnace, reduce direct reduction, reduce the blast furnace 1 fuel consumption of smelting per ton of iron, reduce the CO2 emissions in the process of blast furnace ironmaking.

**Table 11 Composition of furnace gas**

| ingredient | CO | H₂ | N₂ |
|---|---|---|---|
| content | 43.1% | 7.3% | 49.6% |

After the calculation of heat balance and material balance of the blast furnace, after the decarburization, denitrification and heating converter gas is sprayed back to the blast furnace 1, the fuel ratio is 447kg / t, and the coal ratio is 150kg / t and the coke ratio is 297kg / t. Compared with the conventional blast furnace, the carbon-containing fuel is significantly reduced, the fuel ratio is reduced by 68kg / t, the direct carbon reduction ratio is about 13%, and the emission of CO2 per ton of iron is reduced by about 213kg / t.

### Embodiment 4:

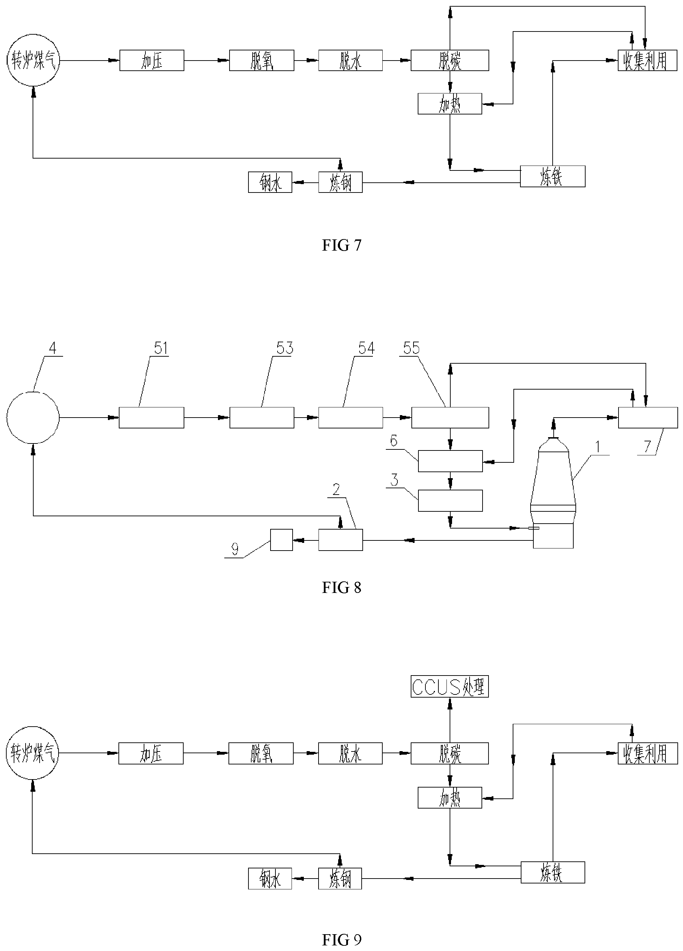

This embodiment uses converter gas dry decarbonization, no nitrogen, heating. Referring to FIG. 7 and 8, the carbon-cycle based blast furnace-converter steel production system of this embodiment includes, but is not limited to, the converter gas collection device 4, the gas pressurization device 51, the gas deoxidation device 53, the gas dehydration device 54, the gas decarbonization device 55, the gas heating device 6, the gas blowing device 3, the blast furnace 1, the gas pipe network 7, and the converter 2. Among them, blast furnace 1, gas pipe network 7 and converter 2 are consistent with the conventional blast furnace-converter system. Different from the embodiment 2 is no gas desulfurization and gas denitrification treatment, the converter gas after heating by the gas heating device 6, gas injection device 3 into the blast furnace 1, other systems and treatment, and the original fuel conditions and the embodiment 2, no longer repeated, only the differences.

Because the converter gas is not denitrification treatment, the gas desulfurization device is cancelled. After the converter gas is pressurized, deoxygenation and dehydrated, the gas enters the gas decarbonization device 55 for gas decarbonization treatment. The dry decarbonization process is still adopted, and the converter gas amount after decarbonization is about 52000 N m3/h, and the analytical gas generated is about 25000 N m3/h. The gas and analytical gas composition after decarbonization are shown in Table 12.

**Table 12 Converter gas and analytical gas composition after decarbonization**

| ingredient | CO | CO₂ | H₂ | N₂ |
|---|---|---|---|---|
| Converter gas after denitrification and decarbonization V% | 59 | 1 | 1 | 39 |
| Analytic gas V% | 13.7 | 83.8 | 2.5 | 0 |

After the gas decarburization device 55 adopts the dry decarbonization process, there is still about 14% CO of the analytical gas produced, which cannot be directly discharged or subjected to CCUS treatment. The analytical gas generated is directly imported into the gas pipe network 7 through the pipeline and used as fuel.

After pressurized, decarbonization of converter gas directly cold by the gas injection device 3 by the blast furnace outlet into the blast furnace 1, can greatly increase the reduced gas ratio in furnace gas, gas composition see table 13, to promote the indirect reduction of blast furnace, reduce direct reduction, reduce the blast furnace 1 fuel consumption of smelting per ton of iron, reduce the CO2 emissions in the process of blast furnace ironmaking.

**Table 13 Composition of furnace gas**

| ingredient | CO | H2 | N2 |
|---|---|---|---|
| content | 42.8% | 7.7% | 49.5% |

After the calculation of blast furnace heat balance and material balance, after the decarburization, denitrification and heating converter gas is sprayed back to blast furnace 1, the fuel ratio is 449kg / t, and the coal ratio is 160kg / t and the coke ratio is 289kg / t. Compared with the conventional blast furnace, the carbon-containing fuel is significantly reduced, the fuel ratio is reduced by 66kg / t, the direct carbon reduction ratio is 12.8%, and the CO2 emission per ton of iron is reduced by about 206kg / t, please refer to Table 14.

### Comparison of the main technical indicators of Table 14, Embodiment 1 to 4

| parameter | Conventional blast furnace | Embodiment 1 Decarbonization , no denitrogen, no heating | Embodiment 2 Decarbonization , denitrification, and heating | Embodiment 3 Decarbonization , denitrification, and unheated | Embodiment 4 Decarbonization, no denitrification, heating |
|---|---|---|---|---|---|
| coke ratio,kg/t | 355 | 313 | 253 | 297 | 289 |
| Coal ratio, kg / t | 160 | 150 | 180 | 150 | 160 |
| fuel ratio,kg/t | 515 | 463 | 433 | 447 | 449 |
| Furnank gas reduced gas ratio | 46% | 50% | 51% | 50% | 50% |
| Drum wind oxygen-rich rate | 5% | 9.5% | 6% | 6% | 7.5% |
| Carbon reduction ratio | | 10% | 16% | 13% | 12.8% |

### Embodiment 5

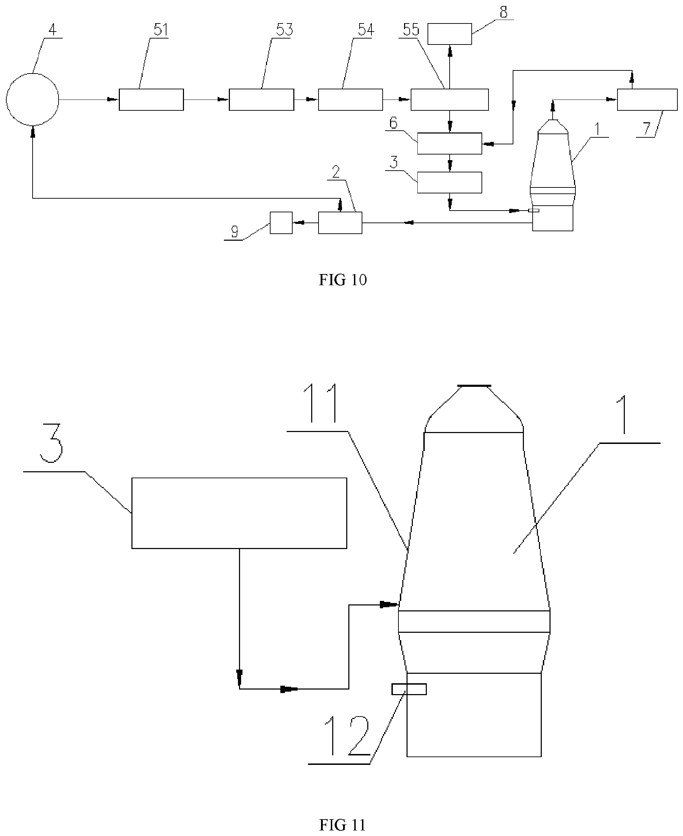

This embodiment adopts the converter gas wet method of decarbonization, no nitrogen, heating. Referring to FIG. 9 and 10, the carbon cycle-based blast furnace-converter steel production system of this embodiment includes, but is not limited to, converter gas collection device 4, gas pressurization device 51, gas dehydration device 54, gas decarburization device 55, CCUS device 8, gas heating device 6, gas blowing device 3, blast furnace 1, gas pipe network 7, and converter 2. Among them, blast furnace 1, gas pipe network 7 and converter 2 are consistent with the conventional blast furnace-converter system. The difference from Embodiment 2 is that the converter gas does not perform gas desulfurization and nitrogen treatment, the gas decarbonization adopts wet process, the CO2 purity of the analytical gas is high, can be directly connected to the CCUS device 8 or directly discharged, no longer into the gas pipe network 7, the decarbonized gas is injected into the blast furnace 13 after heating by the gas heating device 6, other systems and treatment methods, and raw fuel conditions are completely consistent with the Embodiment 2, no longer repeated, only the differences.

The difference between this embodiment and Embodiment 4 is that the gas decarbonization device adopts the wet decarbonization process, and embodiment 3 adopts the dry decarbonization process, and the decarbonization effect is not different, so the reaction and decarbonization effect in the blast furnace are not changed much, and this will not be repeated.

Because the converter gas is not denitrification treatment, the gas desulfurization device is cancelled. After the converter gas is pressurized, deoxygenation and dehydrated, it enters the gas decarbonization device 55 for gas decarbonization treatment. The wet process decarbonization process is adopted, the decarbonized converter gas amount is about 56000 N m3/h, and the analytical gas generated is about 21000 N m3/h. The gas and analytical gas composition after decarbonization are shown in Table 15.

**Table 15 Converter gas and analytical gas composition after decarbonization**

| ingredient | CO | CO₂ | H₂ | N₂ |
|---|---|---|---|---|
| Converter gas after denitrification and decarbonization V% | 61 | 1 | 1.5 | 36.7 |
| Analytic gas V% | 0.8 | 99.2 | 0 | 0 |

The gas decarbonization device 55, using the wet decarbonization process, produces the CO2 concentration in the analytical gas is very high, reaching more than 99%, basically no CO, can be directly CCUS treatment or direct emission, no longer integrated into the gas pipe network 7.

### Embodiment 6:

Referring to FIG. 11, the decarbonized converter gas from embodiment 1 to embodiment 5 is injected into the blast furnace 1 through the air outlet 12. At the same time, according to the different working conditions and the actual carbon reduction requirements, the decarbonized converter gas can be injected from the furnace body 11 of the blast furnace 1. The other system processing methods are the same as in examples 1 to 5, and no description is repeated.

### Embodiment 7:

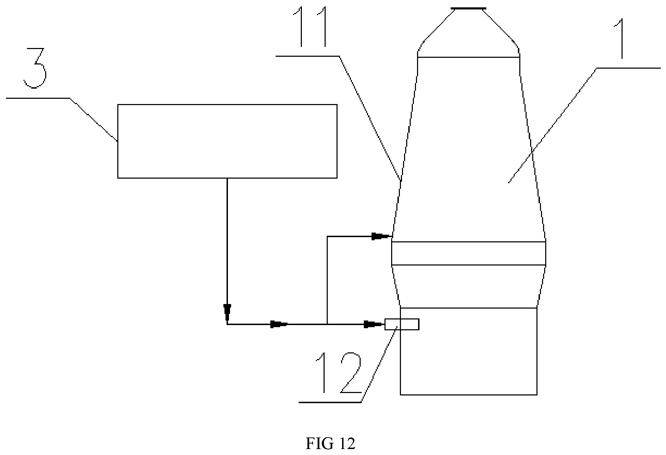

Referring to FIG. 12, the decarbonized converter gas from embodiment 1 to embodiment 5 is injected into the blast furnace 1 through the air outlet 12. At the same time, according to different working conditions and actual carbon reduction requirements, the decarbonized converter gas can be sprayed simultaneously from the furnace body 11 and the air outlet 12 of the blast furnace 1. The other system processing methods are the same as in examples 1 to 5, and no description is repeated.

The production method of blast furnace-converter steel based on carbon cycle of the present invention has simple steps and easy to operate, and realizes the pressurization, desulfurization, deoxygenation, dehydration, decarbonization and denitrification treatment of converter gas, by adopting the blast furnace-converter steel production system based on carbon cycle. Can use steelmaking converter gas, in pressure, desulfurization, oxygen, dehydration, decarbonization, nitrogen, and heating, circulation back into the blast furnace, make full use of effective reduction gas, converter gas blast furnace gas, improve the reduction gas ratio, reduce the consumption of blast furnace iron carbon fuel, thus improve the utilization efficiency of converter gas, effectively reduce the CO2 emissions of blast furnace-converter steel production process, more energy saving and environmental protection.

The above embodiments illustrate the principles and functions of the invention and are not used to limit the invention. Any person familiar with the technique may modify or change the above embodiments without violating the spirit and scope of the present invention. Therefore, all equivalent modifications or changes made by the usual knowledge without the spiritual and technical ideas revealed in the invention of the invention shall still be covered by the claims of the invention.

## Claims

1. A blast furnace-converter steel production method based on carbon recycling, **characterized by** comprising the following steps:
carrying out ironmaking in a blast furnace to obtain molten iron;
introducing the molten iron into a converter, carrying out steelmaking in the converter to obtain molten steel and untreated converter gas;
carrying out pressurization, deoxidation, dehydration and decarburization treatment on the untreated converter gas to obtain resolved gas and treated converter gas;
circulating the treated converter gas back to be injected into the blast furnace to adjust the proportion of reducing gas in the bustle gas in the blast furnace;
obtaining heat source data from the blast furnace gas or the converter resolved gas, determining a heating parameter in combination with a preset heating temperature range; heating the treated converter gas by using a heat exchanger through the heat source data and the heating parameter to obtain gas with stable temperature; obtaining reducing gas concentration data from the blast furnace bustle zone, judging whether the gas injection amount needs to be adjusted in combination with a preset concentration adjustment range, and adjusting the gas injection amount according to the judgment result.

2. The blast furnace-converter steel production method based on carbon recycling according to claim 1, wherein the pressurization, deoxidation, dehydration and decarburization treatment on the untreated converter gas to obtain resolved gas and treated converter gas comprises:
pressurizing the untreated converter gas to 0.50 MPa to 0.65 MPa by a gas pressurizing device to obtain pressurized converter gas;
deoxidizing the pressurized converter gas to an oxygen content of less than 1 ppm by a gas deoxidizing device to obtain deoxidized converter gas;
dehydrating the deoxidized converter gas by a gas dehydrating device until the dehydration efficiency is greater than 95% to obtain dehydrated converter gas;
decarburizing the dehydrated converter gas by a gas decarburizing device until the CO2 removal rate is greater than or equal to 95% to obtain decarburized converter gas;
wherein the CO content in the untreated converter gas is greater than or equal to 40%.

3. The blast furnace-converter steel production method based on carbon recycling according to claim 1, wherein the obtaining of the heat source data from the blast furnace gas or the converter resolved gas and the determination of the heating parameter in combination with a preset heating temperature range comprise:
obtain the composition data and calorific value data of the blast furnace gas and the converter resolved gas, and calculate the required heat according to the preset heating temperature range;
according to the calorific value data of the blast furnace gas and the converter resolved gas, the optimal mixing ratio of the blast furnace gas and the converter resolved gas is calculated by using the linear programming algorithm, so as to meet the required heat and minimize the cost;
if the heat under the optimal mixing ratio calculated is insufficient to reach the preset target temperature range, the required electric heating power parameter is determined by using the bisection search algorithm according to the heat difference;
mix the blast furnace gas and the converter resolved gas according to the optimal mixing ratio calculated, and control the electric heating device according to the calculation result to heat the mixed gas;
during the heating process, the heating temperature data are collected in real time by the temperature sensor, and the data are transmitted into the PID control algorithm to adjust and optimize the heating process in real time;
when the heating temperature reaches the target temperature within the preset range, it is judged that the heating process is completed, the heating is stopped, and the heating parameters and energy consumption data are output;
according to the historical heating parameters and energy consumption data, the heating model and control strategy are continuously optimized by using the reinforcement learning algorithm, so as to further improve the heating efficiency and energy saving effect.

4. The carbon cycle based blast furnace-converter steel production method according to claim 1 or 2, wherein the untreated converter gas is subjected to pressurization, deoxidation, dehydration, and decarburization treatment to obtain treated converter gas, and further comprising subjecting the untreated converter gas to desulfurization treatment and denitrification treatment, wherein the desulfurization treatment precedes the denitrification treatment.

5. The carbon cycle based blast furnace-converter steel production method according to claim 4, wherein the subjecting the untreated converter gas to desulfurization treatment and denitrification treatment comprises:
subjecting the pressurized converter gas to desulfurization treatment by a desulfurization device to a sulfur content of less than 10 ppm to obtain desulfurized converter gas;
subjecting the decarbonized converter gas to denitrification treatment by a denitrification device until a denitrification efficiency of 90% or more is obtained to obtain denitrified converter gas.

6. The carbon cycle based blast furnace-convertor steel manufacturing method according to claim 4, wherein the temperature of the pressurized convertor gas is controlled to be 60-90°C by a cooling device before the desulfurization treatment.

7. The carbon cycle based blast furnace-convertor steel manufacturing method according to claim 4, wherein the pressurization, desulfurization, deoxidation, dehydration, decarbonization, and denitrification treatments are sequentially performed.

8. The carbon cycle based blast furnace-convertor steel manufacturing method according to claim 1, wherein the recycling and blowing of the treated convertor gas into the blast furnace to adjust the proportion of reducing gas in the bustle gas in the blast furnace comprises:
heating the treated convertor gas to 850-950°C by a gas heating device to obtain heated convertor gas;
recycling and blowing the heated convertor gas into the blast furnace by a gas blowing device, wherein a blowing port of the gas blowing device is directed to the shaft and/or tuyere of the blast furnace so that the convertor gas is blown into the shaft and/or tuyere of the blast furnace.

9. The carbon cycle based blast furnace-convertor steel manufacturing method according to claim 8, wherein the heat required for heating by the gas heating device is provided by combustion of gas in a gas pipe network, wherein the gas in the gas pipe network comprises blast furnace gas from the blast furnace and/or the resolved gas.

10. According to claim 8, wherein the decarbonization treatment is dry decarbonization or wet decarbonization; when the decarbonization treatment is dry decarbonization, the CO2 concentration in the resolved gas is less than or equal to 95%, and the resolved gas is merged into a gas pipe network connected to the blast furnace; when the decarbonization treatment is wet decarbonization, the CO2 concentration in the resolved gas is greater than 95%, and the resolved gas is subjected to CCUS treatment.

## Amended claims

### Amended claims in accordance with Rule 137(2) EPC.

1. A blast furnace-converter steel production method based on carbon recycling, **characterized by** comprising the following steps:
carrying out ironmaking in a blast furnace to obtain molten iron;
introducing the molten iron into a converter, carrying out steelmaking in the converter to obtain molten steel and untreated converter gas; wherein the CO content in the untreated converter gas is greater than or equal to 40%;
pressurizing the untreated converter gas to 0.50 MPa to 0.65 MPa by a gas pressurizing device to obtain pressurized converter gas;
deoxidizing the pressurized converter gas to an oxygen content of less than 1 ppm by a gas deoxidizing device to obtain deoxidized converter gas;
dehydrating the deoxidized converter gas by a gas dehydrating device until the dehydration efficiency is greater than 95% to obtain dehydrated converter gas;
decarburization the dehydrated converter gas by a gas decarburization device until the CO₂ removal rate is greater than or equal to 95% to obtain decarburized converter gas and resolved gas;
circulating the decarburized converter gas back to be injected into the blast furnace to adjust the proportion of reducing gas in the bustle gas in the blast furnace;
wherein the method further comprises the following control steps:
heating control step: obtaining composition data and calorific value data from a blast furnace gas and/or the converter resolved gas, calculating the required heat according to the preset heating temperature range; using a linear programming algorithm, with the volume ratio of the blast furnace gas to the converter resolved gas as the independent variable and the lowest total cost as the objective function, calculating the optimal mixing ratio; if the heat under the optimal mixing ratio is insufficient to reach the preset target temperature range, determining the required electric heating power parameter through a bisection search algorithm according to the heat difference; mixing the blast furnace gas and the converter resolved gas according to the optimal mixing ratio, while controlling a electric heating device to heat the mixed gas; during the heating process, collecting heating temperature data in real time through a temperature sensor, and using a PID control algorithm to adjust the heating process in real time; when the heating temperature reaches the target temperature within the preset range, stopping heating, and outputting heating parameters and energy consumption data;
temperature stabilization control step: obtaining temperature and flow parameters of a heat exchanger heat source, establishing a mapping model between the heat source parameters and the heat exchanger heating parameters through a machine learning algorithm; classifying the converter gas by using a clustering algorithm according to the composition and flow parameters of the converter gas to obtain characteristic parameters of different categories of gas; inputting the characteristic parameters into the mapping model to obtain heating parameter control strategies for the corresponding category of gas; applying the control strategies to the control system of the heat exchanger for heating; collecting temperature data of the heated gas at the heat exchanger outlet in real time through a temperature sensor and comparing with the target temperature range, if deviating, adjusting the heating parameters through an optimization algorithm to return the temperature to the target range; when the temperature data measured consecutively for multiple times are all within the target range, determining that the gas temperature has stabilized;
injection amount adjustment step: obtaining reducing gas concentration data in real time from the blast furnace bustle zone, comparing and analyzing with the preset concentration adjustment range; if the reducing gas concentration exceeds the upper limit of the preset range, reducing the gas injection amount; if lower than the lower limit of the preset range, increasing the gas injection amount; using a PID control algorithm, with the reducing gas concentration as the controlled object and the gas injection amount as the control variable, establishing a closed-loop feedback control system to adjust the injection amount in real time; setting a safety threshold range for the gas injection amount, if the adjusted injection amount exceeds the safety range, triggering an alarm;
collaborative optimization step: while adjusting the gas injection amount, obtaining other process parameter data of the blast furnace, using a neural network algorithm to establish a nonlinear association model between various process parameters and the gas injection amount, achieving multi-parameter collaborative optimization control.

2. The method according to claim 1, wherein in the heating control step, a heating model and control strategy are continuously optimized by using a reinforcement learning algorithm according to historical heating parameters and energy consumption data.

3. The method according to claim 1, wherein the machine learning algorithm is a support vector machine regression algorithm; the clustering algorithm is a K-means clustering algorithm, which classifies the untreated converter gas into three categories: high calorific value category, medium calorific value category, and low calorific value category, wherein the high calorific value category has CO≥55% and H₂≥20%, the medium calorific value category has 40%≤CO<55% and 10%≤H₂<20%, and the low calorific value category has CO<40% and H₂<10%.

4. The method according to claim 1, wherein in the injection amount adjustment step, reducing gas concentration variation trend data are continuously collected, a time series analysis algorithm is used to predict the concentration variation trend in a future period of time, and the gas injection amount is optimized and adjusted in advance.

5. The method according to claim 4, wherein the time series analysis algorithm is an ARIMA time series model.

6. The method according to claim 1, wherein the untreated converter gas is further subjected to desulfurization treatment and denitrification treatment, wherein the desulfurization treatment precedes the denitrification treatment;
subjecting the pressurized converter gas to desulfurization treatment by a desulfurization device to a sulfur content of less than 10 ppm;
subjecting the decarburized converter gas to denitrification treatment by a denitrification device until a denitrification efficiency of 90% or more is obtained;
controlling the temperature of the pressurized converter gas to be 60°C-90°C by a cooling device before the desulfurization treatment.

7. The method according to claim 1 or 6, wherein the pressurization, desulfurization, deoxidation, dehydration, decarburization, and denitrification treatments are sequentially performed.

8. The method according to claim 1, wherein the recycling and blowing of the decarburized converter gas into the blast furnace, comprises:
heating the treated converter gas to 850-950°C by a gas heating device;
blowing the heated converter gas to the shaft and/or tuyere of the blast furnace by a gas blowing device.

9. The method according to claim 8, wherein the heat required for heating by the gas heating device is provided by combustion of gas in a gas pipe network, wherein the gas in the gas pipe network comprises blast furnace gas and/or the resolved gas.

10. The method according to claim 1, wherein the decarburization treatment is dry decarburization or wet decarburization; when the decarburization treatment is dry decarburization, the CO₂ concentration in the resolved gas is less than or equal to 95%, and the resolved gas is merged into a gas pipe network connected to the blast furnace; when the decarburization treatment is wet decarburization, the CO₂ concentration in the resolved gas is greater than 95%, and the resolved gas is subjected to carbon capture, utilization and storage treatment.
